# FASCICULE DE BREVET EUROPEEN

(11) **EP 0 760 306 B1**
(45) Date de publication et mention de la délivrance du brevet: **26.03.1997**
(21) Numéro de dépôt: 95440082.6
(22) Date de dépôt: 01.12.1995
(51) Int. Cl.: B60K 15/05

(54) **Système de trappe à essence**
Tankklappe
Tank inlet cover

(43) Date de publication de la demande: 05.03.1997
(73) Titulaire: OMEGAL (Société Anonyme), 67540 Ostwald (FR)
(72) Inventeur: Wigishoff, Jean-Jacques, F-67190 Dingsheim (FR); Schott, Eloi, F-67206 Mittelhausbergen (FR)
(74) Mandataire: Littolff, Denis

(56) Documents cités:
- EP-A- 0 273 525
- DE-A- 3 118 267
- DE-A- 3 301 072
- DE-A- 4 416 992
- DE-U- 7 328 516
- US-A- 4 782 978
- US-A- 5 165 749

## Description

La présente invention concerne les systèmes destinés à masquer l'orifice de la canalisation d'alimentation en carburant d'un véhicule automobile.

Pendant très longtemps, cet orifice a consisté en un simple bouchon adapté sur l'embouchure de la canalisation, généralement par une liaison du type baïonnette ; pour prévenir les vols, un tel bouchon était généralement associé à un système de verrouillage. Ce dispositif rustique étant au niveau de la carrosserie, il était très inesthétique.

C'est pourquoi, dans un premier temps, on l'a dissimulé en le plaçant derrière la plaque d'immatriculation, ou derrière l'un des ensembles de feux de signalisation arrière, ladite plaque ou ledit ensemble étant monté basculant pour permettre l'accès au bouchon.

Finalement, la solution adoptée a été de situer l'embouchure de la canalisation, avec son bouchon, au fond d'un bol métallique, logé lui-même dans un espace situé derrière la surface extérieure de la carrosserie, ledit espace étant lui-même masqué par une trappe pivotante, dont la surface extérieure est au niveau de la surface extérieure de la carrosserie, dont elle assure la continuité.

Des perfectionnements à ce système ont consisté, d'une part à assurer le pivotement de la trappe par l'intermédiaire d'un bras en forme de "col de cygne", facilitant l'effacement de la trappe en position ouverte, ce qui facilite l'accès à la canalisation située au fond du bol, et d'autre part à associer à la trappe des mécanismes déterminant pour la trappe deux positions stables, à savoir la position complètement ouverte et la position complètement fermée, privilégiées par rapport à toutes les positions intermédiaires.

Ainsi, un tel montage faisant appel à un bras en "col de cygne" est décrit au brevet US 5 437 491, tandis que des mécanismes déterminant deux positions extrêmes d'équilibre pour la trappe (ouverture complète et fermeture complète) sont décrits dans les documents FR-A-2664864 et FR-A-2672256.

Toutefois, ces systèmes connus présentent encore chacune ses propres inconvénients.

Ainsi, le bras "en col de cygne" risque d'osciller par rapport à la position optimale, au centre de l'ouverture du bol, de sorte que la trappe est souvent décentrée en position fermée.

De même, les différents mécanismes proposés exigent, pour déterminer une manoeuvre agréable de la trappe, d'être régulièrement graissés, faute de quoi l'ensemble du système risque de gripper et de se fausser ou même de se déloger.

Enfin, ces systèmes étaient généralement adaptés à la carrosserie par l'arrière de la carrosserie, donc depuis l'intérieur, ce qui exigeait une opération de vissage à l'aveugle, assez longue et délicate.

Pour être complets, il faut mentionner que le dernier perfectionnement à ces systèmes consiste à les équiper d'un dispositif de verrouillage, actionné à distance en même temps que le verrouillage des portes de ce coffre. Toutefois, ces dispositifs sont généralement surdimensionnés, étant prévus pour des tringleries plus importantes et montées à distance, de façon non solidaire de l'ensemble.

L'invention vise un système de ce type général éliminant tous ces inconvénients.

Plus spécialement, l'invention vise un perfectionnement aux systèmes pour le masquage de l'accès à l'embouchure de la canalisation de remplissage du réservoir de carburant d'un véhicule automobile, comprenant un volume principal ou bol logé à l'intérieur de la carrosserie du véhicule et dans le fond duquel débouche ladite canalisation, et ouvert sur l'extérieur de la carrosserie, et une trappe destinée à fermer ce bol, articulée autour d'un axe parallèle à la surface de la carrosserie par l'intermédiaire d'un bras arrondi en "col de cygne" de manière à basculer entre une position ouverte, donnant accès au bol et une position fermée, dans laquelle la surface externe de la trappe est au niveau de la surface externe de la carrosserie, du type dans lequel des moyens élastiques exercent sur la trappe une action telle que lesdites positions ouverte et fermée soient stables par rapport aux positions intermédiaires, lesdits moyens élastiques consistant en une lame en matériau élastique fixée à l'une de ses extrémités à la paroi d'un premier volume auxiliaire solidaire latéralement dudit bol et subissant, en fonction du basculement dudit bras arrondi, une déformation brusque entre deux états stables correspondant auxdites positions, ouverte et fermée, de la trappe, un tel système selon le préambule de la revendication 1 étant décrit dans le document US-A-4782978, ce perfectionnement assurant le centrage de la trappe en position fermée et éliminant la nécessité du graissage des moyens élastiques. Selon l'invention, ce perfectionnement consiste essentiellement en ce que, dans un système tel qu'ainsi défini, ladite lame a la forme d'un U dont une branche est solidaire d'une paroi d'un boîtier amovible logé dans ledit premier volume auxiliaire, tandis que l'autre branche est en contact surfacique, avec l'un ou l'autre de deux méplats délimitant l'extrémité dudit bras arrondi traversée par ledit axe parallèlement à ce dernier, la rotation de ladite extrémité autour dudit axe à chaque basculement dudit bras entre ses positions stables déterminant le passage progressif ou continu dudit contact surfacique de ladite branches avec l'un desdits méplats à un contact surfacique de ladite branche avec l'autre desdits méplats, ce passage se faisant par un contact linéaire avec pression entre ladite branche et l'arête commune entre lesdits méplats, avec déformation concomitante de ladite lame en U, ce qui assure la stabilité entre les deux positions externes du bras et par suite de la trappe.

Un tel perfectionnement peut être réalisé sous forme de plusieurs variantes.

Selon une première variante, ledit bras en "col de cygne" a la forme d'une fourche dont chaque branche est une poutrelle creuse à caissons, ladite plaque élastique étant disposée entre lesdites branches et ledit méplat étant formé sur une entretoise transversale réunissant les extrémités desdites branches.

Dans ce cas, ledit axe d'articulation de la trappe peut être métallique et traverser complètement ladite entretoise et ledit boîtier, ses extrémités étant portées par des paliers pratiqués sur les parois horizontales en regard dudit premier volume auxiliaire, ou bien il peut être en plastique et constitué par les prolongements extérieurs de ladite entretoise au-delà des faces extérieures desdites branches, ces prolongements étant portés par des demi-paliers ouverts respectivement vers l'avant et vers l'arrière formés face à face respectivement dans les parois horizontales dudit boîtier et dudit premier volume auxiliaire.

Selon une seconde variante, ledit bras en "col de cygne" a la forme d'une fourche à plusieurs branches, dont au moins les branches extérieures sont des poutrelles creuses à caissons, ledit méplat étant formé sur une branche intérieure à égale distance des branches extérieures.

Dans l'une ou l'autre variante, ledit boîtier peut être associé au premier volume auxiliaire par l'arrière ou latéralement, et lui être fixé par tout moyen convenable, par exemple par clipsage ou vissage.

De même ladite plaque élastique peut être en plastique, venue de moulage avec l'ensemble dudit boîtier, ou encore métallique et fixée sur la face intérieure de la paroi verticale dudit boîtier, ou directement sur celle dudit premier volume auxiliaire.

Par ailleurs, dans le cadre de l'invention, ladite trappe est réunie audit bras par une aile ou charnon prolongeant ledit col de cygne. Cette réunion peut prendre plusieurs formes :

Ainsi, par exemple, ladite trappe peut se composer seulement d'une peau, et ledit charnon lui être assemblé par clipsage, ou bien ladite trappe se compose d'une peau et d'une doublure réunies par soudage, ledit charnon venant se loger de façon amovible par frottement entre ladite peau et ladite doublure, ou encore le charnon est moulé en une seule pièce avec soit la peau, soit la doublure de la trappe.

Par ailleurs, selon l'invention, auxdits volume principal et premier volume auxiliaire est solidaire un second volume auxiliaire dans lequel est logé un mécanisme de verrouillage de ladite trappe en position fermée.

Selon une première variante, dans ce second volume auxiliaire vient se loger un boîtier amovible contenant ledit mécanisme de verrouillage. Selon une seconde variante, c'est ce second volume auxiliaire qui constitue lui-même ledit boîtier, dans lequel on introduit de façon amovible ledit mécanisme de verrouillage.

Ledit mécanisme de verrouillage peut être à commande électrique, par exemple associée au verrouillage centralisé des portes et du coffre, ou à commande manuelle, par exemple par câble. Il peut être associé à un système de pré-déverrouillage partiel.

Par ailleurs, toujours dans le cadre de l'invention, ledit volume principal comporte sur sa périphérie ouverte vers l'extérieur un joint en élastomère, comportant sur sa face intérieure des butées assurant l'auto-centrage de la trappe à sa fermeture d'une part, et d'autre part du bol dans l'ouverture de son logement. Ce joint peut être constitué par un élastomère différent du matériau du volume principal et des volumes auxiliaires, et venu de moulage avec, ou bien être rapporté sur la périphérie du volume principal.

Enfin, selon une caractéristique intéressante de l'invention, bien que le volume principal puisse être fixé à la carrosserie par vissage ou rivetage depuis l'extérieur du véhicule par l'intérieur du bol, il est prévu que ledit volume principal et la face arrière de la carrosserie comportent des éléments d'assemblage par clipsage permettant la mise en place manuelle dudit système par l'extérieur de la carrosserie.

L'ensemble complet, se composant du volume principal et des deux volumes auxiliaires, de la trappe et des éléments associés logés dans des volumes venus de moulage avec le bol, peut ainsi être inséré aisément dans l'espace qui lui est réservé dans la carrosserie par l'avant de celle-ci, et clipsé en place sans autre intervention.

D'autres caractéristiques et avantages de l'invention apparaîtront de la description ci-après, donnée à titre d'exemple d'illustration non limitatif, et correspondant au dessin annexé sur lequel :
La figure 1 est une coupe horizontale schématique d'une première réalisation de l'ensemble d'un système de trappe selon l'invention, en place dans la carrosserie d'une automobile ;
La figure 2 est une coupe de la même trappe, mais seule ;
La figure 3 est une vue latérale de ladite trappe, vue de l'intérieur ;
La figure 4 est une coupe horizontale du volume principal, seul, avec ses deux volumes auxiliaires ;
La figure 5 est une vue de dessus d'une première réalisation du boîtier logé dans le premier volume auxiliaire ;
La figure 6 est une coupe verticale du même boîtier, en place dans ledit premier volume auxiliaire, et passant par l'axe d'articulation de la trappe ;
La figure 7 est une coupe horizontale d'une seconde réalisation du même boîtier, représenté seul ;
La figure 8 est une coupe horizontale du boîtier de la figure 7, une fois en place dans le premier volume auxiliaire, avec la portion de l'extrémité du bras en col de cygne coopérant avec la plaque élastique ;
La figure 9 est une coupe verticale semblable à la figure 6 du boîtier de la figure 7 ;
La figure 10 est une vue de dessus du volume principal, faisant apparaître les moyens de clipsage à la carrosserie ;
La figure 11 est une coupe selon XI-XI de la figure 10, et
La figure 12 est une vue semblable à la figure 1 d'un autre mode de réalisation de l'ensemble du système selon l'invention.

Sur toutes les figures, les mêmes éléments ou les éléments équivalents sont désignés par les mêmes références numériques.

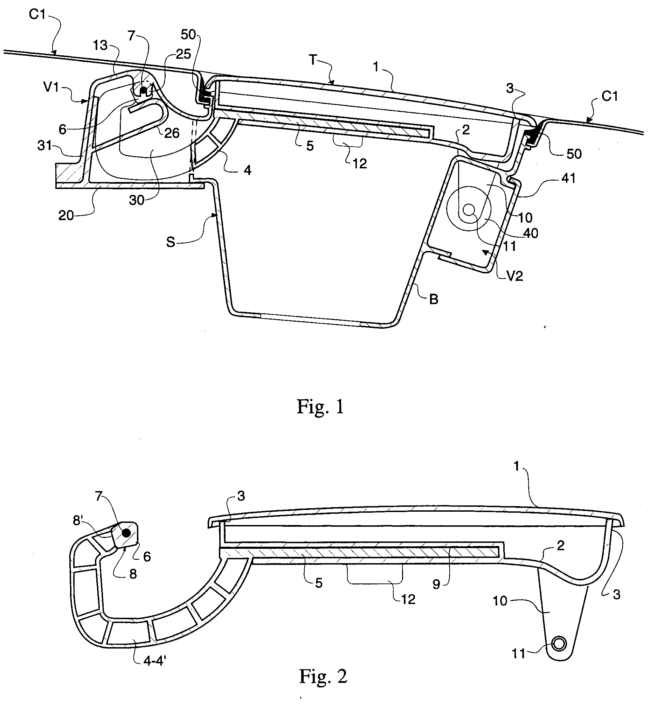

En se référant tout d'abord à la figure 1, on a représenté un mode de réalisation d'un système selon l'invention, désigné par la référence générale S, en place dans une ouverture pratiquée dans la face extérieure d'une carrosserie de véhicule, se composant d'une peau C₁, C₂ et d'une doublure (non représentée).

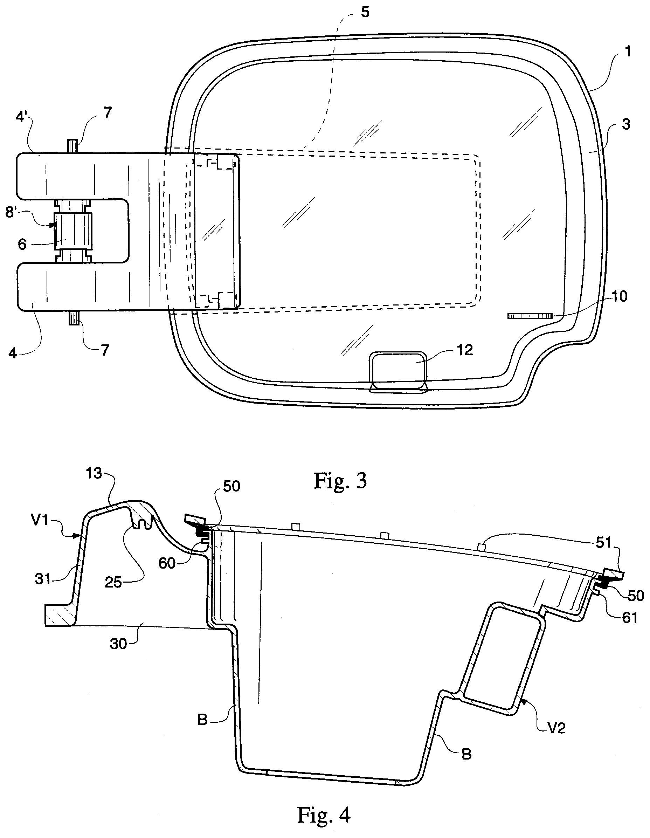

Ce système se compose essentiellement de la combinaison d'une trappe T, ayant la constitution illustrée en détail aux figures 2 et 3, et d'un volume principal ou bol B, dans le fond duquel vient se loger l'embouchure de la pipe de carburant, avec son bouchon, et duquel sont solidaires par moulage deux volumes auxiliaires V₁ et V₂.

La structure des volumes V₁ et V₂ peut prendre plusieurs variantes, comme illustré aux figures 4 à 9 et 12.

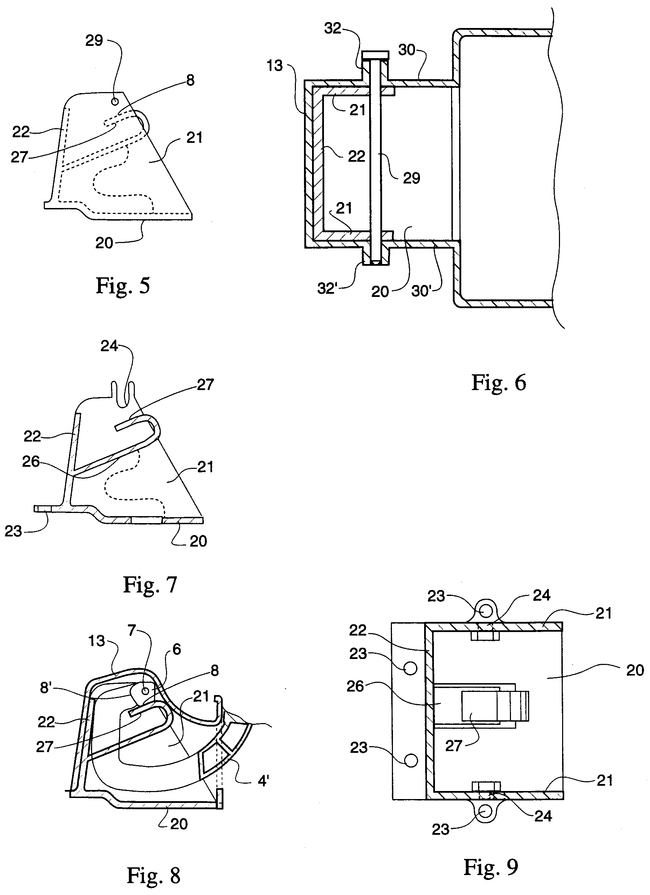

De même, la structure de la trappe P, qui constitue l'une des caractéristiques de l'invention, se compose dans le cas représenté :
- de la trappe proprement dite, formée généralement d'une peau extérieure 1 et d'une doublure intérieure 2, la doublure étant soudée sur la face arrière de la peau, par exemple, par un procédé de soudure par vibration tel que décrit dans le document EP-A-720907 (état de la technique selon l'art. 54(3) CBE), le long d'une ligne 3.
- du bras en col de cygne en forme de fourche 4, 4' dont les branches 4 et 4' sont réunies d'un côté à un charnon 5, et à l'autre extrémité, recourbée à 270 ° d'arc environ, à une poutrelle transversale 6, traversée par un axe de pivotement 29 (voir figure 6) ou prolongée extérieurement par un tel axe 7 (figure 3). La face arrière de la poutre 6 présente un couple de méplats 8, 8', orientés à environ 90°, et dont le rôle sera exposé plus loin.

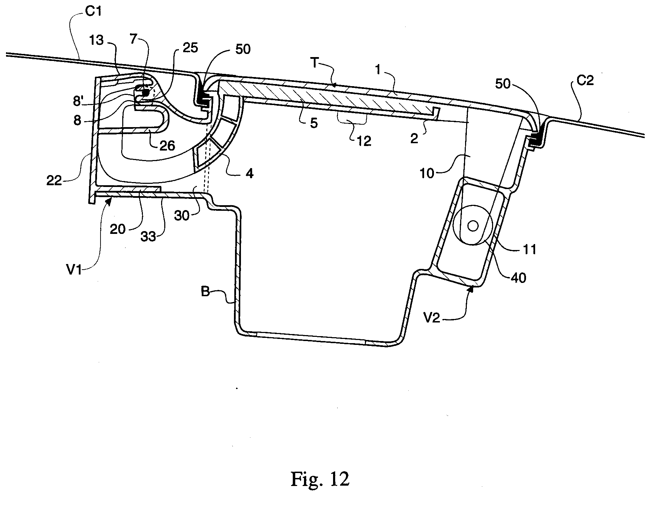

Dans la réalisation représentée, le bras 4 - 5 est rendu solidaire de la trappe proprement dite 1 - 2, par coincement du charnon 5 dans un logement (9) pratiqué dans la doublure 2 (figures 1 - 3) ou entre la peau 1 et la doublure 2 (figure 12).

Selon une autre variante encore, le bras 4 - 5 peut également venir de moulage en une seule pièce avec la peau 1 ou la doublure 2.

Selon l'invention, les branches 4, 4' du col de cygne sont moulées sous forme de caissons, ce qui donne audit col de cygne un volume qui assure la rigidité du bras et, par voie de conséquence, de l'ensemble du bras et de la trappe, au cours de leurs pivotements répétés.

Une patte 10 perpendiculaire au plan de la trappe, présente une lumière 11 destinée au verrouillage de la trappe comme on le verra plus loin.

Un crochet 12 vers le bas de la face intérieure de la trappe est destiné à l'accrochage du bouchon au cours du remplissage.

On va maintenant décrire la partie de l'invention faisant intervenir la combinaison des éléments formant et / ou contenues dans le premier volume auxiliaire V₁, selon les diverses variantes possibles.

Comme le montrent les figures 1 et 4, au bol B est associé par moulage un premier volume auxiliaire V1 se composant de deux joues horizontales 30, 30' et une paroi verticale périphérique 13, comprenant une portion frontale se situant directement derrière la carrosserie C₁ et une portion latérale 31, ce volume V₁, constituant un logement pour une pièce formant couvercle et ressort, apparaissant sur la figure 1, et dont deux modes de réalisation sont représentés en détail aux figures 5 à 9. Cette pièce se compose dans les deux cas d'une embase 20 solidaire de deux joues 21 et d'un dos 22.

Dans la première réalisation, représentée aux figures 5 et 6, cette pièce est traversée par l'axe de pivotement 29 du bras 4 - 5, cet axe étant métallique et porté par des paliers 32, 32' prévus dans les joues 30, 30' du volume V₁. Dans ce cas, ladite pièce ou boîtier est fixé au volume V1 par vissage ou clipsage.

Dans la seconde réalisation, représentée aux figures 7, 8 et 9, chaque joue 21 comporte à sa partie supérieure un demi-palier 24, destiné à recevoir les extrémités 7 de l'axe de pivotement du bras en col de cygne, ces demi-paliers 24 coopérant avec des demi-paliers 25 orientés en sens inverse, portés par la paroi 13 (voir figure 4).

Dans ce cas, l'axe de pivotement 7 constitue un prolongement de l'entretoise 6 réunissant les bras 4, 4' et est en plastique. Pour la solidité de l'ensemble, il est préférable que le boîtier soit alors fixé au volume V₁, au moyen de quatre vis traversant des trous 23.

Dans les deux réalisations du boîtier ainsi logé dans le volume V₁, l'invention prévoit que la face interne de la paroi 22 porte une lame élastique en U 26, dont la branche libre 27 exerce une pression élastique sur l'un ou l'autre des méplats 8, 8', en fonction de la position de la trappe, ce qui stabilise ladite trappe dans ladite position.

Dans la variante de montage du boîtier dans le premier volume auxiliaire V₁ illustré par la figure 12, ledit boîtier, au lieu d'être introduit dans le volume V₁ par l'arrière, comme dans les réalisations précédentes, est introduit latéralement, à peu près parallèlement à la carrosserie C₁. Dans ce cas, le volume V₁ comporte une cloison verticale arrière 33 sur laquelle vient s'adosser l'embase 20 du boîtier. La fixation du boîtier peut alors simplement s'effectuer par deux clips, bien qu'il s'agisse d'un axe plastique.

Par ailleurs, selon l'invention, un second volume auxiliaire V₂ est également solidaire par moulage avec le volume principal B et le premier volume auxiliaire V₁.

Comme le montrent respectivement les figures 1 et 12, ce second volume auxiliaire V₂ est destiné à recevoir un mécanisme de verrouillage à distance de la trappe P en position fermée. Ce mécanisme, désigné symboliquement par la référence 40, peut être de toute construction, se composant d'un élément mobile, axialement ou en rotation, pour venir se loger dans la lumière 11 de la patte 10 portée par la trappe (voir figure 2). La commande de cette tige peut se faire automatiquement, par exemple simultanément au verrouillage centralisé des portes et / ou du coffre, ou manuellement. Elle peut comporter un système de pré-déverrouillage, permettant d'entrouvrir la trappe pour en faciliter la manoeuvre. Un tel mécanisme, n'exigeant que peu d'énergie, peut être de plus petites dimensions que ceux couramment utilisés pour les portes, ce qui permet de le loger dans un boîtier qui peut être introduit dans un volume V₂ complètement fermé ou partiellement ouvert sur l'extérieur, sauf sur une extrémité (figure 12). Selon une variante, c'est le volume V₂ lui-même qui constitue un boîtier comportant un couvercle 41 (figure 1).

Par ailleurs, comme il apparaît aux figures 1 et 12, un joint 50 en matériau élastomère est prévu entre l'ensemble formé par le volume principal et les deux volumes auxiliaires V₁ et V₂ d'une part, et la carrosserie C₁ C₂ d'autre part, et enfin le rebord intérieur de la trappe. Ce joint assure en premier lieu l'auto-centrage dudit ensemble dans l'ouverture de la carrosserie et en second lieu l'étanchéité entre l'intérieur dudit ensemble et la zone périphérique qui l'entoure à l'intérieur de la carrosserie, et à cet effet, il comporte sur sa périphérie intérieure des butées souples telles que 51 (figure 4) qui permettent un auto-centrage de la trappe en position fermée. Comme on le voit par rapprochement entre la figure 4 d'une part et les figures 1 ou 12 d'autre part, la section transversale de ce joint 50 est déformée vers l'intérieur par la carrosserie C₁, C₂, quand l'ensemble selon l'invention est mis en place. Ce joint peut être réalisé en matériau élastomère moulé simultanément avec le bol et les volumes auxiliaires, ou être simplement rapporté sur ces derniers. De toutes façon, grâce à la rigidité résultant de la structure en caissons des branches 4, 4' de la fourche qui permet le pivotement de la trappe, cette dernière risque très peu d'être déviée de son emplacement, de sorte que ce centrage est pratiquement superflu. Il trouve cependant son utilité dans le cas où le bras en col de cygne n'est pas caissonné, ou dans celui où le système de pivotement est inefficacement précis.

Enfin, une caractéristique importante du système selon l'invention réside dans ses moyens de mise en place. Bien entendu, il serait possible de visser ou riveter le volume principal depuis l'arrière de la carrosserie, mais cette solution, classique, serait malcommode. Selon l'invention, il est prévu d'insérer l'ensemble bol (avec les volumes auxiliaires) / trappe par le devant de la carrosserie et de le maintenir en place par simple clipsage, le joint périphérique assurant un auto-centrage immédiat.

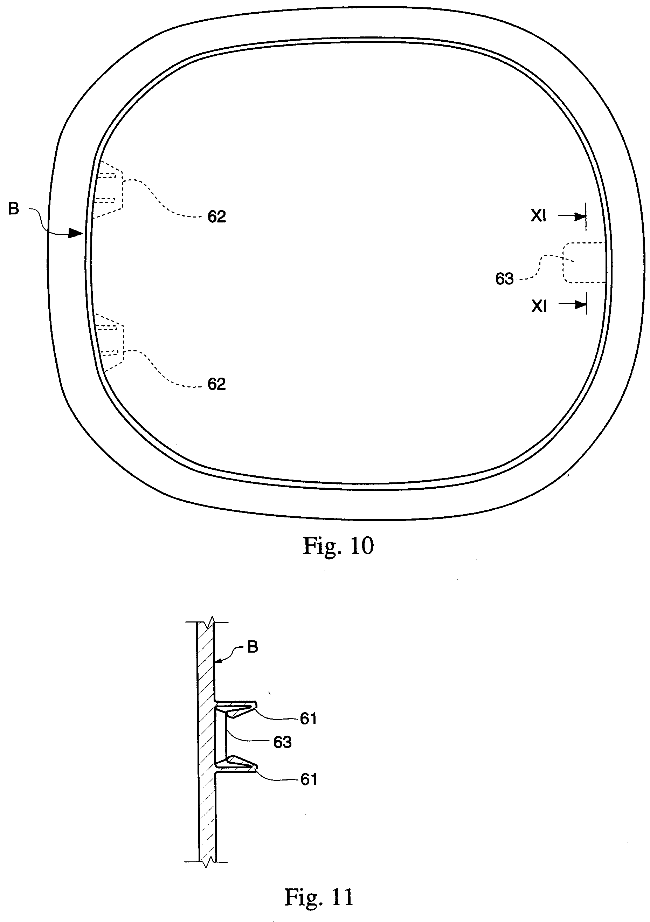

A cet effet, comme il est représenté aux figures 10 et 11, le bol B comporte, sous sa périphérie avant, au moins deux pattes 60 (figure 4) venant se glisser sous des éléments correspondants (62) de la carrosserie C₁ et sous sa périphérie arrière un clip 61 venant se bloquer dans un élément correspondant (63) de la carrosserie C₂ (figure 10).

Dans le cas où les pattes 62 occupent une grande proportion de la périphérie de la carrosserie, le système de clipsage 61 peut être orienté de manière à permettre une insertion pratiquement perpendiculaire.

La mise en place du système selon l'invention se fait donc très simplement et sans aucun outillage, par insertion de l'ensemble tout monté (sauf éventuellement la trappe T), dans l'ouverture prévue dans la carrosserie C₁ - C₂, d'abord par les pattes 60, puis après basculement immobilisation par clipsage de 61.

Dans le cas où la trappe est mise en peinture préalablement chez le fournisseur, il est possible de livrer l'ensemble tout monté (sauf la trappe T), qu'il suffit de mettre en place dans la carrosserie comme indiqué ci-dessus, puis d'assembler la trappe T et le charnon 5, au cours d'une opération n'exigeant ni outillage, ni habileté particulière, d'où il résulte une économie considérable sur les frais de montage de ce produit.

Dans le cas où le bras 4 - 5 et la peau 1 ou la doublure 2 sont moulés en une seule pièce, l'ensemble peut être mis en place dans le boîtier 20 - 21 - 22 occupant déjà son emplacement dans le premier volume auxiliaire V₁, par simple glissement des axes plastiques 7 sur des rampes appropriées pratiquées sur les joues 21, jusqu'aux paliers 24 - 25, et cela même après montage de l'ensemble du bol B et des volumes V₁, V₂ sur le véhicule.

## Revendications

1. Système pour le masquage de l'accès à l'embouchure de la canalisation de remplissage du réservoir de carburant d'un véhicule automobile, comprenant un volume principal ou bol (B) logé à l'intérieur de la carrosserie du véhicule et dans le fond duquel débouche ladite canalisation, et ouvert sur l'extérieur de la carrosserie, et une trappe (P) destinée à fermer ce bol, articulée autour d'un axe (7) parallèle à la surface de la carrosserie par l'intermédiaire d'un bras arrondi en "col de cygne" (4, 4') de manière à basculer entre une position ouverte, donnant accès au bol et une position fermée, dans laquelle la surface externe de la trappe est au niveau de la surface externe de la carrosserie, du type dans lequel des moyens élastiques exercent sur la trappe une action telle que lesdites positions ouverte et fermée soient stables par rapport aux positions intermédiaires,
lesdits moyens élastiques consistant en une lame en matériau élastique fixée à l'une de ses extrémités à la paroi d'un premier volume auxiliaire solidaire latéralement dudit bol et subissant, en fonction du basculement dudit bras arrondi, une déformation brusque entre deux états stables correspondant auxdites positions, ouverte et fermée, de la trappe,
caractérisé en ce que
ladite lame a la forme d'un U dont une branche (26) est solidaire d'une paroi (22) d'un boîtier amovible (20, 21, 22) logé dans ledit premier volume auxiliaire (V1), tandis que l'autre branche (27) est en contact surfacique, avec l'un ou l'autre de deux méplats (8, 8') délimitant l'extrémité (6) dudit bras arrondi traversée par ledit axe (7) parallèlement à ce dernier, la rotation de ladite extrémité (6) autour dudit axe (7) à chaque basculement dudit bras entre ses positions stables déterminant le passage progressif ou continu dudit contact surfacique de ladite branche (27) avec l'un desdits méplats (8 ou 8') à un contact surfacique de ladite branche (27) avec l'autre desdits méplats (8 ou 8'), ce passage se faisant par un contact linéaire avec pression entre ladite branche (27) et l'arête commune entre lesdits méplats (8, 8'), avec déformation concomitante de ladite lame en U, ce qui assure la stabilité entre les deux positions externes du bras (4, 4') et par suite de la trappe (P).

2. Système selon la revendication 1, caractérisé en ce que ledit bras en "col de cygne" a la forme d'une fourche dont chaque branche est une poutrelle creuse à caissons, ladite plaque élastique étant disposée entre lesdites branches et ledit méplat étant formé sur une entretoise transversale placée entre les extrémités desdites branches.

3. Système selon les revendications 1 et 2, caractérisé en ce que ledit axe d'articulation de la trappe est métallique et traverse complètement ladite entretoise et ledit boîtier, ses extrémités étant portées par des paliers pratiqués sur les parois horizontales en regard dudit premier volume auxiliaire.

4. Système selon les revendications 1 et 2, caractérisé en ce que ledit axe d'articulation de la trappe est en plastique et constitué par les prolongements extérieurs de ladite entretoise au-delà des faces extérieures desdites branches, ces prolongements étant portés par des demi-paliers ouverts respectivement vers l'avant et vers l'arrière formés face à face respectivement dans les parois horizontales dudit boîtier et dudit premier volume auxiliaire.

5. Système selon la revendication 3 ou 4, caractérisé en ce que ledit boîtier est associé audit premier volume auxiliaire par l'arrière, et lui est fixé par vissage ou clipsage.

6. Système selon la revendication 3 ou 4, caractérisé en ce que ledit boîtier est associé latéralement audit premier volume auxiliaire et lui est fixé par clipsage.

7. Système selon la revendication 1, caractérisé en ce que ledit bras en "col de cygne" a la forme d'une fourche à plusieurs branches, dont au moins les branches extérieures sont des poutrelles, ledit méplat étant formé sur une branche intérieure à égale distance des branches extérieures.

8. Système selon l'une quelconque des revendications 1 à 7, caractérisé en ce que ladite plaque élastique est en plastique, venue de moulage avec l'ensemble dudit boîtier.

9. Système selon l'une quelconque des revendications 1 à 7, caractérisé en ce que ladite plaque est métallique et rapportée sur la face intérieure de la paroi verticale dudit boîtier, ou celle du premier volume auxiliaire.

10. Système selon l'une quelconque des revendications 1 à 9, caractérisé en ce que ladite trappe est réunie audit bras par un charnon prolongeant ledit col de cygne.

11. Système selon la revendication 10, caractérisé en ce que ladite trappe se compose d'une peau et d'une doublure réunies par soudage, ledit charnon venant se loger de façon amovible par frottement entre ladite peau et ladite doublure.

12. Système selon la revendication 10, caractérisé en ce que ladite trappe se compose seulement d'une peau, et ledit charnon lui est assemblé par clipsage.

13. Système selon la revendication 10, caractérisé en ce que ledit charnon est venu de moulage soit avec la peau, soit avec la doublure de la trappe.

14. Système selon l'une quelconque des revendications 1 à 13, caractérisé en ce qu'audit volume principal est solidaire un second volume auxiliaire dans lequel est logé un mécanisme de verrouillage de ladite trappe en position fermée.

15. Système selon la revendication 14, caractérisé en ce que ledit second volume auxiliaire constitue un boîtier éventuellement fermé par un couvercle et qui enferme ledit mécanisme.

16. Système selon la revendication 14, caractérisé en ce que ledit second volume auxiliaire est destiné à servir de logement à un boîtier amovible contenant ledit mécanisme.

17. Système selon l'une quelconque des revendications 14 à 16, caractérisé en ce que ledit mécanisme est à commande électrique, par exemple associée au verrouillage des portes et du coffre.

18. Système selon l'une quelconque des revendications 14 à 16, caractérisé en ce que ledit mécanisme est à commande manuelle, par exemple à câble.

19. Système selon l'une quelconque des revendications 14 à 18, caractérisé en ce que ledit mécanisme est associé à un système de pré-déverrouillage partiel.

20. Système selon l'une quelconque des revendications 1 à 18, caractérisé en ce que ledit volume principal comporte sur sa périphérie ouverte vers l'extérieur un joint en élastomère, comportant sur sa face intérieure des butées assurant en premier lieu l'auto-centrage dudit ensemble dans l'ouverture de la carrosserie et en second lieu l'étanchéité entre l'intérieur dudit ensemble et la zone périphérique qui l'entoure à l'intérieur de la carrosserie, ainsi que l'auto-centrage de la trappe en position fermée.

21. Système selon la revendication 20, caractérisé en ce que ledit joint est un élastomère différent du matériau du volume principal et des volumes auxiliaires, et venu de moulage avec eux.

22. Système selon la revendication 20, caractérisé en ce que ledit joint est rapporté sur la périphérie du volume principal.

23. Système selon l'une des revendications 1 à 22, caractérisé en ce que ledit volume principal et la face arrière de la carrosserie comportent des éléments d'assemblage par clipsage permettant la mise en place manuelle dudit système par l'extérieur de la carrosserie.

24. Système selon l'une quelconque de la revendication 1 à 22, caractérisé en ce que ledit volume principal est fixé sur l'arrière de la carrosserie par vissage ou rivetage.

## Claims

1. System for masking the access to the passage opening of the fuel tank of a motor vehicle, comprising a main volume or bowl housed inside the body of the vehicle and open on the exterior of the body, the said passage opening into the base thereof, and a flap designed to close this bowl pivoted parallel with the surface of the body about an axle by means of an arm rounded to the shape of a "swan's neck" such that it flips between an open position providing access to the bowl and a closed position in which the external surface of the flap is level with the external surface of the body, of the type in which resilient means exert a force on the flap such that the said open and closed positions are stable relative to the intermediate positions,
characterised in that
the said resilient means consists of at least one leaf made from an elastic material sintered into a U-shape and positioned in a removable casing housed in a first auxiliary volume laterally integral with the said bowl, one branch of which is held fast in the said casing whilst the other branch is subjected to the pressure of an end flat member of the said arm through which the said axle passes.

2. System as claimed in claim 1, characterised in that the said "swan's neck" arm is fork-shaped and each branch thereof is a hollow beam having compartments, the said elastic leaf being arranged between the said branches and the said flat member being formed on a transverse brace member positioned between the ends of the said branches.

3. System as claimed in claims 1 and 2, characterised in that the said pivoting axle of the flap is metal and passes completely through the said brace member and the said casing, the ends thereof being supported by bearings provided on the horizontal walls facing the said first auxiliary volume.

4. System as claimed in claims 1 and 2, characterised in that the said pivoting axle of the flap is made from plastics material and comprises the external extensions of the said brace member beyond the external faces of the said branches, these extensions being supported by half-bearings open respectively to the front and to the rear arranged face to face in the horizontal walls of the said casing and the said first auxiliary volume respectively.

5. System as claimed in claim 3 or 4, characterised in that the said casing is joined to the first auxiliary volume at the rear and is secured thereto by screw-fitting or clamping means.

6. System as claimed in claim 3 or 4, characterised in that the said casing is laterally joined to the said first auxiliary volume and is fixed thereto by clamping means.

7. System as claimed in claim 1, characterised in that the said "swan's neck" arm is shaped as a fork with several branches, the external branches at least thereof being beams, the said flat member being formed on an internal branch equidistant from the external branches.

8. System as claimed in any one of claims 1 to 7, characterised in that the said elastic leaf is of a plastics material, cast by a moulding process with the said casing unit.

9. System as claimed in any one of claims 1 to 7, characterised in that the said leaf is metal and is joined to the inner face of the vertical wall of the said casing or that of the first auxiliary volume.

10. System as claimed in any one of claims 1 to 9, characterised in that the said flap is joined to the said arm by means of a knuckle extending the said swan's neck.

11. System as claimed in claim 10, characterised in that the said flap consists of a skin and a lining joined by welding, the said knuckle being housed such that it is capable of movement by dint of friction between the said skin and the said lining.

12. System as claimed in claim 10, characterised in that the said flap consists of a skin only and the said knuckle is assembled therewith by clamping means.

13. System as claimed in claim 10, characterised in that the said knuckle is cast by moulding either with the skin or with the lining of the flap.

14. System as claimed in any one of claims 1 to 13, characterised in that integral with the main volume is a second auxiliary volume which houses a locking mechanism for the said flap when in the closed position.

15. System as claimed in claim 14, characterised in that the said second auxiliary volume forms a casing which can be closed by means of a lid and which encloses the said mechanism.

16. System as claimed in claim 14, characterised in that the said second auxiliary volume is designed to provide a housing for a removable casing containing the said mechanism.

17. System as claimed in any one of claims 14 to 16, characterised in that the said mechanism is electrically controlled, for example in conjunction with the locking system of the doors and boot.

18. System as claimed in any one of claims 14 to 16, characterised in that the said mechanism is manually controlled by means of a cable, for example.

19. System as claimed in any one of claims 14 to 18, characterised in that the said mechanism is incorporated with a partial pre-locking system.

20. System as claimed in any one of claims 1 to 18, characterised in that the said main volume has on the periphery thereof that is open to the exterior an elastomer seal having stops on its internal face in order to provide in the first instance an automatic centring mechanism for the said assembly in the opening of the body and subsequently to provide a seal between the interior of the said assembly and the peripheral zone surrounding the interior of the body and to centre the flap automatically in the closed position.

21. System as claimed in claim 20, characterised in that the said seal is made from a different elastomer from the material used for the main volume and the auxiliary volumes and is cast therewith by a moulding process.

22. System as claimed in claim 20, characterised in that the said seal is joined onto the periphery of the main volume.

23. System as claimed in one of claims 1 to 22, characterised in that the said main volume and the rear face of the body have elements for providing a clamp-fit assembly enabling the said system to be fitted manually from the exterior of the body.

24. System as claimed in any one of claims 1 to 22, characterised in that the said main volume is secured onto the rear of the body by screwing or riveting.

## Patentansprüche

1. System für die Abdeckung des Zugangs zur Mündung der Befüllungsrohrleitung des Kraftstoffbehälters eines Kraftfahrzeugs, mit einem Hauptvolumen oder einer Schale B, die sich innerhalb der Fahrzeugkarosserie befindet, in deren Boden die Rohrleitung mündet und die zur Außenseite der Karosserie offen ist, sowie mit einer Klappe T, die dazu bestimmt ist, diese Schale zu verschließen, und die um eine zur Oberfläche der Karosserie parallele Achse (7) über einen abgerundeten Arm in Form eines "Schwanenhalses" (4, 4') in der Weise angelenkt ist, daß sie zwischen einer offenen Stellung, die den Zugang zur Schale ergibt, und einer geschlossenen Stellung, in der sich die äußere Oberfläche der Klappe auf Höhe der äußeren Oberfläche der Karosserie befindet, schwenken kann, des Typs, bei dem elastische Mittel auf die Klappe eine Wirkung ausüben, derart, das die offene Stellung bzw. die geschlossene Stellung in bezug auf Zwischenstellungen stabil sind,
wobei die elastischen Mittel aus einem Plättchen aus elastischem Material bestehen, das mit einem seiner Enden an der Wand eines an der Schale seitlich befestigten ersten Hilfsvolumens befestigt ist und das in Abhängigkeit von der Schwenkung des abgerundeten Arms einer plötzlichen Verformung zwischen zwei stabilen Zuständen, die der offenen bzw. der geschlossenen Stellung der Klappe entsprechen, unterliegt,
dadurch gekennzeichnet, daß
das Plättchen die Form eines U besitzt, wovon ein Schenkel (26) an einer Wand (22) eines abnehmbaren Gehäuses (20, 21, 22) befestigt ist, das sich im ersten Hilfsvolumen (V1) befindet, während der andere Schenkel (27) mit der einen oder der anderen von zwei Abflachungen (8, 8') in Oberflächenkontakt ist, welche dasjenige Ende (6) des abgerundeten Arms begrenzen, durch das die Achse (7) parallel zu diesem letzteren verläuft, wobei die Drehung dieses Endes (6) um die Achse (7) bei jeder Schwenkung des Arms zwischen seinen stabilen Stellungen den allmählichen oder ununterbrochenen Übergang vom Oberflächenkontakt des Schenkels (27) mit einer der Abflachungen (8 oder 8') in einen Oberflächenkontakt des Schenkels (27) mit der anderen der Abflachungen (8 oder 8') festlegt, wobei dieser Übergang durch einen linearen Kontakt mit Druck zwischen dem Schenkel (27) und der gemeinsamen Kante zwischen den Abflachungen (8, 8') mit einer begleitenden Verformung des U-förmigen Plättchens, die die Stabilität zwischen den zwei äußeren Stellungen des Arms (4, 4') und infolgedessen der Klappe (T) sicherstellt, erfolgt.

2. System nach Anspruch 1, dadurch gekennzeichnet, daß der "Schwanenhals"-Arm die Form einer Gabel besitzt, wovon ein Zinken ein Hohlstab mit Fächern ist, wobei die elastische Platte zwischen den Zinken angeordnet ist und die Abflachung an einem transversalen Abstandhalter ausgebildet ist, der zwischen den Enden der Zinken angeordnet ist.

3. System nach den Ansprüchen 1 und 2, dadurch gekennzeichnet, daß die Schwenkachse der Klappe aus Metall besteht und vollständig durch den Abstandhalter sowie durch das Gehäuse verläuft, wobei ihre Enden durch Lager unterstützt sind, die in den horizontalen Wänden gegenüber dem ersten Hilfsvolumen ausgebildet sind.

4. System nach den Ansprüchen 1 und 2, dadurch gekennzeichnet, daß die Schwenkachse der Klappe aus Kunststoff besteht und aus den äußeren Verlängerungen des Abstandhalters über die äußeren Flächen der Schenkel hinaus gebildet ist, wobei diese Verlängerungen durch Halblager unterstützt sind, die nach vorn bzw. nach hinten offen sind und in einander zugewandter Stellung in den horizontalen Wänden des Gehäuses bzw. des ersten Hilfsvolumens ausgebildet sind.

5. System nach Anspruch 3 oder 4, dadurch gekennzeichnet, daß das Gehäuse mit dem ersten Hilfsvolumen rückseitig verbunden ist und daran durch verschrauben oder Einrasten befestigt ist.

6. System nach Anspruch 3 oder 4, dadurch gekennzeichnet, daß das Gehäuse mit dem ersten Hilfsvolumen seitlich verbunden ist und daran durch Einrasten befestigt ist.

7. System nach Anspruch 1, dadurch gekennzeichnet, daß der "Schwanenhals"-Arm die Form einer Gabel mit mehreren Zinken besitzt, wovon wenigsten die äußeren Zinken Stäbe sind, wobei die Abflachung an einem inneren Zinken in gleichem Abstand zu den äußeren Zinken gebildet ist.

8. System nach irgendeinem der Ansprüche 1 bis 7, dadurch gekennzeichnet, daß die elastische Platte aus Kunststoff besteht und sich durch Gießen zusammen mit dem Gehäuse ergibt.

9. System nach irgendeinem der Ansprüche 1 bis 7, dadurch gekennzeichnet, daß die Platte aus Metall besteht und an die Innenfläche der vertikalen Wand des Gehäuses oder an diejenige des ersten Hilfsvolumens angefügt ist.

10. System nach einem der Ansprüche 1 bis 9, dadurch gekennzeichnet, daß die Klappe mit dem Arm durch einen den Schwanenhals verlängernden Plattenansatz verbunden ist.

11. System nach Anspruch 10, dadurch gekennzeichnet, daß die Klappe aus einer Außenhaut und einer Aufdoppelung durch Verschweißen gebildet ist, wobei sich der Plattenansatz mittels Reibung lösbar zwischen der Außenhaut und der Aufdoppelung befindet.

12. System nach Anspruch 10, dadurch gekennzeichnet, daß die Klappe nur aus einer Außenhaut gebildet ist und der Plattenansatz durch Einrasten mit ihr verbunden ist.

13. System nach Anspruch 10, dadurch gekennzeichnet, daß der Plattenansatz entweder zusammen mit der Außenhaut oder zusammen mit der Aufdoppelung der Klappe gegossen ist.

14. System nach irgendeinem der Ansprüche 1 bis 13, dadurch gekennzeichnet, daß am Hauptvolumen ein zweites Hilfsvolumen befestigt ist, in dem sich ein Mechanismus zur Verriegelung der Klappe in der geschlossenen Stellung befindet.

15. System nach Anspruch 14, dadurch gekennzeichnet, daß das zweite Hilfsvolumen ein Gehäuse bildet, das eventuell durch einen Deckel verschlossen ist und das den Mechanismus einschließt.

16. System nach Anspruch 14, dadurch gekennzeichnet, daß das zweite Hilfsvolumen dazu vorgesehen ist, als Aufnahmesitz für ein den Mechanismus enthaltendes abnehmbares Gehäuse zu dienen.

17. System nach irgendeinem der Ansprüche 14 bis 16, dadurch gekennzeichnet, daß der Mechanismus elektrisch gesteuert wird, wobei die Steuerung beispielsweise der Verriegelung der Türen und des Kofferraums zugeordnet ist.

18. System nach irgendeinem der Ansprüche 14 bis 16, dadurch gekennzeichnet, daß der Mechanismus von Hand beispielsweise mittels eines Seilzugs gesteuert wird.

19. System nach irgendeinem der Ansprüche 14 bis 18, dadurch gekennzeichnet, daß der Mechanismus einem System für teilweise Vorentriegelung zugeordnet ist.

20. System nach irgendeinem der Ansprüche 1 bis 18, dadurch gekennzeichnet, daß das Hauptvolumen an seinem nach außen offenen Umfangsrand eine Elastomer-Dichtung aufweist, die an ihrer Innenfläche Anschläge enthält, die erstens die Selbstzentrierung der Gesamtheit in der Öffnung der Karosserie gewährleisten und zweitens die Dichtigkeit zwischen dem Innenraum der Gesamtheit und der Umfangsrandzone, die ihn innerhalb der Karosserie umgibt, sowie die Selbstzentrierung der Klappe in der geschlossenen Stellung gewährleisten.

21. System nach Anspruch 20, dadurch gekennzeichnet, daß die Dichtung ein Elastomer ist, der vom Material des Hauptvolumens und der Hilfsvolumina verschieden ist und sich durch Gießen zusammen mit ihnen ergibt.

22. System nach Anspruch 20, dadurch gekennzeichnet, daß die Dichtung an den Umfangsrand des Hauptvolumens angefügt ist.

23. System nach einem der Ansprüche 1 bis 22, dadurch gekennzeichnet, daß das Hauptvolumen und die hintere Fläche der Karosserie Einrastmontageelemente enthalten, die die manuelle Anordnung des Systems von außerhalb der Karosserie ermöglichen.

24. System nach irgendeinem der Ansprüche 1 bis 22, dadurch gekennzeichnet, daß das Hauptvolumen an der Rückseite der Karosserie durch Anschrauben oder Annieten befestigt ist.
